# EUROPEAN PATENT SPECIFICATION

(11) **EP 4 344 948 B1**
(45) Date of publication and mention of the grant of the patent: **22.10.2025**
(21) Application number: 23179698.8
(22) Date of filing: 16.06.2023
(51) Int. Cl.: B60N 2/90, B60N 2/62

(54) **THIGH SUPPORT FOR A DRIVER'S OR PASSENGER SEAT OF A CAR**
OBERSCHENKELSTÜTZE FÜR EINEN FAHRER- ODER FAHRGASTSITZ EINES FAHRZEUGS
REPOSE-CUISSE POUR SIEGE DE CONDUCTEUR OU DE PASSAGER D'UNE VOITURE

(30) Priority: 17.06.2022 NL 2032215
(43) Date of publication of application: 03.04.2024
(73) Proprietor: Bike Basics GmbH, 53343 Wachtberg (DE)
(72) Inventor: GAASTRA, Gerrit, 53177 Bonn (DE)
(74) Representative: Verhees, Godefridus Josephus Maria

(56) References cited:
- US-A- 2 522 887
- US-A- 2 650 654

## Description

### Field of the invention

The invention relates to a thigh support for a seat, in particular a driver's seat or passenger seat of a car, for providing extra lateral support, so that the user has to make less effort to remain properly seated in the seat while making of a quick bend, which thigh support comprises a support body which, for use, has to be arranged next to a thigh of the user on the seat surface of the seat and extends upwards from the seat surface, which thigh support comprises two seat plates, one on each side of the support body which seat plates are attached to the support body with a first edge, and which seat plates are present on the seat surface of the seat next to the support body during use and each having a width of at least 15 cm, and wherein during use the user rests with a thighs on one of the seat plates.

### State of the art

A thigh support for a seat, in particular a driver's seat or passenger seat of a car, for providing lateral support to a user's leg during use, which thigh support comprises a support body which for use is to be placed next to a thigh of the user on the seat surface of the seat and extends upwards from the seat surface, said thigh support comprising two seat plates, one on each side of the support body, is known from US 2 522 887 A. This known thigh support is designed in such a way that during use the user rests with both legs on one of the seat plates and that the support body is not between the legs but against the outside of one of the user's legs and provides support only to that side of the legs. During use, the support body supports the leg of the user that operates the accelerator pedal laterally, so that only effort needs to be made to operate the accelerator pedal and the leg becomes less tired.

When cornering quickly, the user tends to slide off the seat. The known thigh support herein only provides support when taking a bend in one direction.

### Summary of the invention

An object of the invention is to provide a thigh support of the type described in the prior art which offers better lateral support to the user during use. To this end, the thigh support according to the invention shows the features of claim

Because during use the support body of the thigh support according to the invention is present between the two thighs of the user, the thigh support according to the invention provides support to the user in both lateral directions to prevent sliding over the seat surface, instead of only in one direction, as is the case with the known thigh support. Because the side surfaces of the support body are spaced apart the support body is present comfortably between the thighs of a user

Preferably, the height of the support body is at least 10 cm to prevent the user from sliding over the support body while taking a fast turn.

An embodiment of the thigh support according to the invention is characterized in that both seat surface plates are provided with side supports on a second edge opposite the first edge, which during use extend upwards from the seat surface. These side supports provide the user with extra lateral support when making a turn, so that the user has to make less effort to stay seated in the seat.

The combination of two side supports and a support body present between them ensures that each of the thighs of the user find support in both lateral directions in this embodiment of the thigh support, so that the user does not shift and does not have to make any or little effort to maintain his or her position on the seat surface.

The thigh support can be made to measure for the seat for which it is intended in such a way that the side supports are present against the side cheeks of the seat surface of the seat during use.

A further embodiment of the thigh support according to the invention is characterized in that both seat plates are provided with downwardly extending ridges at the location of a second edge opposite the first edge, which are present during use between the seat surface of the seat and the side bolsters of the seat directly next to the seat surface. As a result, the thigh support is enclosed between the side bolsters of the seat so that it cannot shift sideways. The underside of the plates no longer need to be non-slip.

The thigh support is furthermore preferably provided with a downwardly protruding projection in or near the center of the rear edge to prevent the thigh support from shifting in the direction of travel of the car.

### Brief description of the drawings

The invention will be explained in more detail below on the basis of exemplary embodiments of the thigh support according to the invention shown in the drawings. Hereby:
Figure 1 shows a first embodiment of the thigh support according to the invention;
Figure 2 shows the thigh support shown in Figure 1 in a position above the seat surface of a driver's seat or passenger seat shortly before being fitted to the seat;
Figure 3 shows the thigh support shown in figure 1 placed on the seat surface of a driver's seat surface or passenger seat surface;
Figure 4 shows a second embodiment of the thigh support according to the invention;
Figure 5 shows the thigh support shown in figure 4 in front view;
Figure 6 shows the thigh support shown in figure 4 in a position above the seat surface of a driver's seat or passenger seat shortly before being fitted onto the seat; and
Figure 7 shows the thigh support shown in figure 4 placed on the seat surface of a driver's seat or passenger seat.

### Detailed description of the drawings

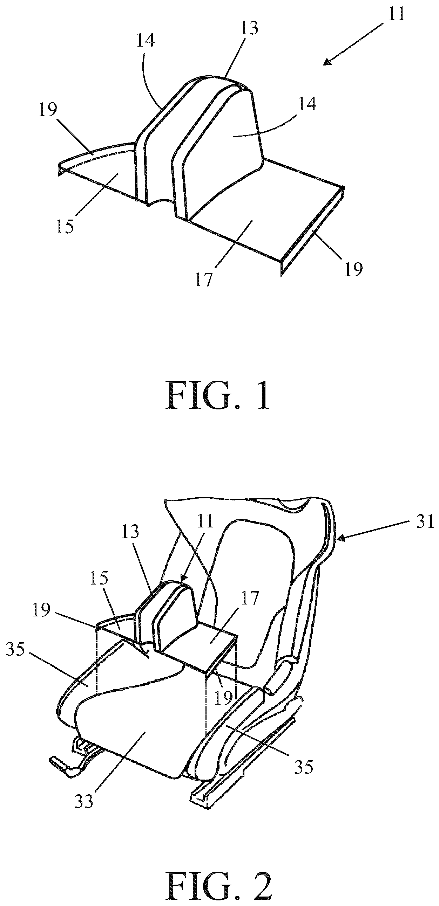

Figure 1 shows a perspective view of a first embodiment of the thigh support according to the invention. The thigh support 11 has a support body 13 and two seat plates 15 and 17 attached to it with an edge. The seat plates 15 and 17 are provided with ridges 19 projecting downwards on the opposite edge. The height of the support body 13 measured from the seat plates varies between the about 10 cm and about 15 cm and the width of the support body 13 between the two side walls 14 is about 8 cm.

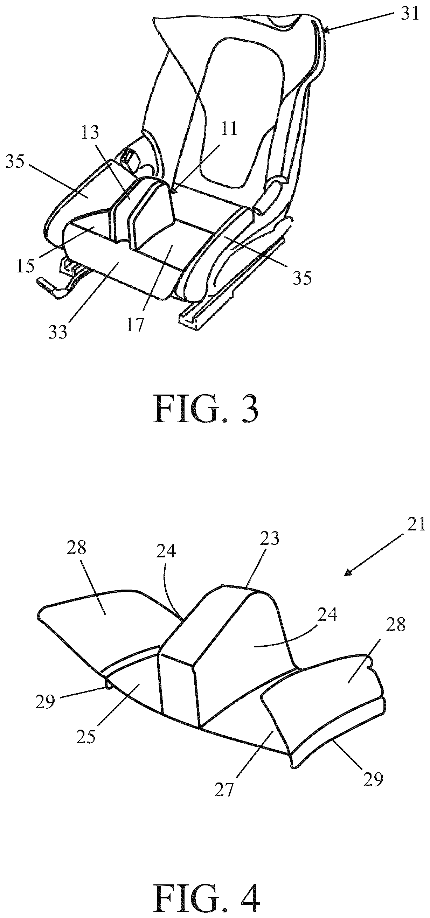

The thigh support 11 must be placed on the seat surface 33 of the seat 31 before use, see figure 2, with the seat plates 15 and 17 resting on the seat surface 33 of the seat 31 and the ledges 19 between the seat surface 33 of the seat 31 and side bolsters 35 of the seat 31 are present directly next to the seat surface 33 . In Figure 3 the thigh support 11 is shown present on the seat 31 ready for use. The seat plates preferably each have a width between 10 and 25 cm. Even more preferred is an embodiment in which the seat plates have a width of at least 15 cm.

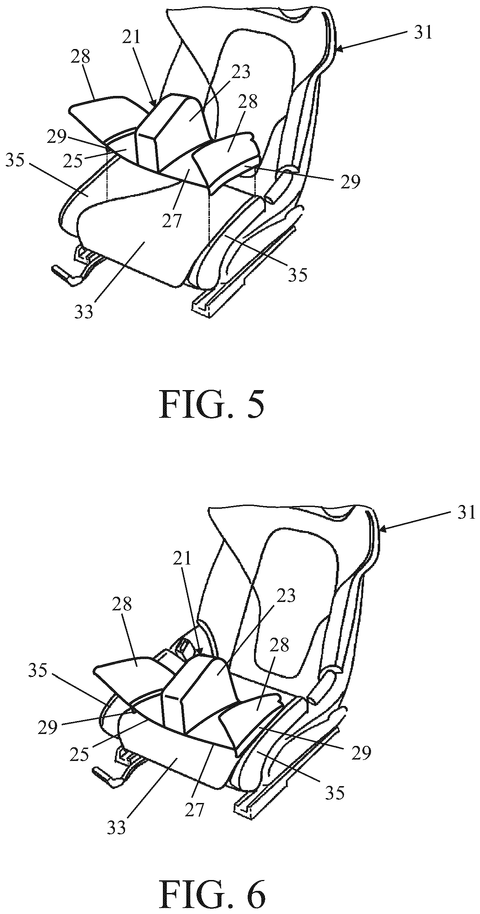

Figures 4 and 5 show a second embodiment of the thigh support according to the invention in perspective and front view, respectively. This thigh support 21 also has a support body 23 and two seat plates 25 and 27 attached thereto with an edge. The seat plates 25 and 27 are also provided with ridges 29 projecting downwards. In this embodiment, the upper leg support 21 is furthermore provided with side supports 28 which are attached to the seat plates 25 and 27 on the same edges as those on which the ridges 29 are present. These side supports 28 are present ageinst the side cheeks 35 of the seat surface 33 of the seat 31 during use.

This thigh support 21 must also be placed on the seat surface 33 of the seat 31 before use, see figure 6, with the seat plates 25 and 27 resting on the seat surface 33 of the seat 31 and the ridges 29 between the seat surface 33 of the seat 31 and side bolsters 35 of the seat 31 immediately next to the seat surface 33. In Figure 7, the thigh support 21 is shown present on the seat 31 ready for use.

## Claims

1. Thigh support (11; 21) for a seat (31), in particular a driver's seat or passenger seat of a car, for providing lateral support to a user's leg during use, which thigh support (11; 21) comprises a support body (13; 23) which for use is to be placed next to a thigh of the user on the seat surface (33) of the seat and extends upwards from the seat surface (33), said thigh support (11; 21) comprising two seat plates (15, 17; 25, 27), one on each side of the support body (13; 23), which seat plates (15, 17; 25, 27) are attached to the support body (13; 23) with a first edge, and which seat plates (15, 17; 25, 27) during use are present on the seat surface of the seat (31) next to the support body (13; 23) and each having a width of at least 15 cm, wherein during use the user rests with the thighs on the seat plates (15, 17; 25, 27), wherein the both seat plates (15, 17; 25, 27) have such a width that during use they are present under the full width of the thighs of a user and wherein the support body (13; 23) has two substantially parallel side surfaces (14; 24) which are spaced apart between 5 and 25 cm.

2. Thigh support (11; 21) according to claim 1, **characterized in that** the height of the support body (13; 23) is at least 10 cm.

3. Thigh support (21) according to any one of the preceding claims, **characterized in that** the two seat plates (25, 27) are provided with side supports (28) on a second edge opposite the first edge, which side supports during use extend upwards from the seat surface (33).

4. Thigh support (11; 21) according to any one of the preceding claims, **characterized in that** both seat plates (15, 17; 25, 27) are provided at a second edge opposite the first edge with ridges (19; 29) extending downwards, which, during use, are between the seat surface (33) of the seat (31) and the side bolsters (35) of the seat (31) directly next to the seat surface (33).

5. Thigh support (11; 21) according to any one of the preceding claims, **characterized in that** the thigh support (11; 21) is furthermore provided with a downwardly protruding projection in or near the center of the rear edge to prevent displacement of the thigh support (11; 21) in the direction of travel of the car.

## Patentansprüche

1. Oberschenkelstütze (11; 21) für einen Sitz (31), insbesondere einen Fahrer- oder Beifahrersitz eines Autos, zur seitlichen Unterstützung des Beins eines Benutzers während der Benutzung, wobei die Oberschenkelstütze (11; 21) einen Stützkörper (13; 23) umfasst, der im Gebrauch neben einem Oberschenkel des Benutzers auf der Sitzfläche (33) des Sitzes platziert wird und sich von der Sitzfläche (33) nach oben erstreckt, wobei die Oberschenkelstütze (11; 21) zwei Sitzplatten (15, 17; 25, 27) umfasst, eine auf jeder Seite des Stützkörpers (13; 23), die mit einer ersten Kante am Stützkörper (13; 23) befestigt sind und im Gebrauch auf der Sitzfläche des Sitzes (31) neben dem Stützkörper (13; 23) liegen, wobei die Sitzplatten (15, 17; 25, 27) jeweils mindestens 15 cm breit sind, wobei der Benutzer während der Benutzung mit den Oberschenkeln auf den Sitzplatten (15, 17; 25, 27) ruht, wobei die beiden Sitzplatten (15, 17; 25, 27) so breit sind, dass sie während der Benutzung die gesamte Oberschenkelbreite des Benutzers abdecken, wobei der Stützkörper (13; 23) zwei im Wesentlichen parallele Seitenflächen (14; 24) auf weist, die einen Abstand zwischen 5 und 25 cm aufweisen.

2. Oberschenkelstütze (11; 21) nach Anspruch 1, **dadurch gekennzeichnet, dass** die Höhe des Stützkörpers (13; 23) mindestens 10 cm beträgt.

3. Oberschenkelstütze (21) nach einem der vorhergehenden Ansprüche, **dadurch gekennzeichnet, dass** die beiden Sitzplatten (25, 27) an einer der ersten Kante gegenüberliegenden zweiten Kante mit Seitenstützen (28) versehen sind, die sich während der Benutzung von der Sitzfläche (33) nach oben erstrecken.

4. Oberschenkelstütze (11; 21) nach einem der vorhergehenden Ansprüche, **dadurch gekennzeichnet, dass** beide Sitzplatten (15, 17; 25, 27) an einer der ersten Kante gegenüberliegenden zweiten Kante mit nach unten verlaufenden Rippen (19; 29) versehen sind, die sich im Gebrauch zwischen der Sitzfläche (33) des Sitzes (31) und den Seitenwangen (35) des Sitzes (31) unmittelbar neben der Sitzfläche (33) befinden.

5. Oberschenkelstütze (11; 21) nach einem der vorhergehenden Ansprüche, **dadurch gekennzeichnet, dass** die Oberschenkelstütze (11; 21) außerdem in oder nahe der Mitte der hinteren Kante mit einem nach unten ragenden Vorsprung versehen ist, um eine Verschiebung der Oberschenkelstütze (11; 21) in Fahrtrichtung des Fahrzeugs zu verhindern.

## Revendications

1. Appui-cuisse (11 ; 21) pour siège (31), notamment conducteur ou passager d'une voiture, destiné à soutenir latéralement la jambe de l'utilisateur pendant l'utilisation, cet appui-cuisse (11 ; 21) comprend un corps d'appui (13 ; 23) qui, lors de l'utilisation, est placé à côté de la cuisse de l'utilisateur sur la surface d'assise (33) du siège et s'étend vers le haut depuis cette surface, cet appui-cuisse (11 ; 21) comprend deux plaques d'assise (15, 17 ; 25, 27), une de chaque côté du corps d'appui (13 ; 23), fixées au corps d'appui (13 ; 23) par un premier bord, et qui, lors de l'utilisation, sont présentes sur la surface d'assise du siège (31) à côté du corps d'appui (13 ; 23) et ayant chacun une largeur d'au moins 15 cm, lors de l'utilisation, l'utilisateur repose les cuisses sur les plaques d'assise (15, 17 ; 25, 27), les deux plaques d'assise (15, 17 ; 25, 27) ont une largeur telle qu'elles s'étendent sous toute la largeur des cuisses de l'utilisateur, le corps de support (13 ; 23) présente deux surfaces latérales (14 ; 24) sensiblement parallèles, espacées de 5 à 25 cm.

2. Appui-cuisse (11 ; 21) selon la revendication 1, **caractérisé en ce que** la hauteur du corps de support (13 ; 23) est d'au moins 10 cm.

3. Appui-cuisses (21) selon l'une quelconque des revendications précédentes, **caractérisé en ce que** les deux plaques d'assise (25, 27) sont munies, sur un second bord opposé au premier, de supports latéraux (28) qui, en utilisation, s'étendent vers le haut depuis la surface d'assise (33).

4. Appui-cuisses (11 ; 21) selon l'une quelconque des revendications précédentes, **caractérisé en ce que** les deux plaques d'assise (15, 17 ; 25, 27) sont munies, sur un second bord opposé au premier, de nervures (19 ; 29) s'étendant vers le bas, lesquelles, en utilisation, se trouvent entre la surface d'assise (33) du siège (31) et les bourrelets latéraux (35) du siège (31) directement à côté de la surface d'assise (33).

5. Appui-cuisse (11 ; 21) selon l'une quelconque des revendications précédentes, **caractérisé en ce que** le appui-cuisse (11 ; 21) est en outre pourvu d'une saillie faisant saillie vers le bas dans ou à proximité du centre du bord arrière pour empêcher le déplacement du appui-cuisse (11 ; 21) dans le sens de déplacement de la voiture.
